# EUROPEAN PATENT APPLICATION

(11) **EP 3 476 551 A1**
(43) Date of publication of application: **01.05.2019**
(21) Application number: 17815517.2
(22) Date of filing: 23.06.2017
(51) Int. Cl.: B25J 11/00, A61F 2/56, B66F 19/00

(54) **MUSCULAR STRENGTH ASSISTANCE DEVICE**

(30) Priority: 23.06.2016 JP 2016124931
(71) Applicant: National University Corporation Kagawa University, Takamatsu-shi, Kagawa 760-8521 (JP); Nabtesco Corporation, Tokyo 102-0093 (JP)
(72) Inventor: SASAKI, Daisuke, Takamatsu-shi Kagawa 761-0396 (JP); KIKUTANI, Isao, Tokyo 102-0093 (JP); YOKOYAMA, Kazuya, Tokyo 102-0093 (JP)
(74) Representative: Grünecker Patent- und Rechtsanwälte PartG mbB
(86) International application number: PCT/JP2017/023221
(87) International publication number: WO 2017/222052

(57) **Abstract**

A muscular strength assisting apparatus (10) includes a drive means (30) held by a first attachment tool (20) attached to a torso, and a transmission means (35) for transmitting a force output by the drive means (30) to a second attachment tool (25) attached to an upper arm. The transmission means includes an output shaft member (76) coupled to the second attachment tool, and a switching means (40) capable of switching between transmission and interruption of a force from the drive means to the output shaft member. The switching means is disposed on a rear, upper or laterally outer side of the output shaft member.

## Description

### TECHNICAL FIELD

The present invention relates to a muscular strength assisting apparatus that is worn by a wearer so as to assist muscular strength of the wearer.

### BACKGROUND ART

As disclosed in, for example, Japanese Patent Application Publication No. 2015-182833A, attention has been focused on a muscular strength assisting apparatus with the aim of reducing a physical and muscular load on workers engaged in agriculture, construction industry, nursing care, and so on. The muscular strength assisting apparatus includes a pair of attachment tools mounted respectively to a torso and upper arm of a human body, which are connected together via a shoulder joint, and assists muscular strength of a wearer of the muscular strength assisting apparatus by retaining the pair of attachment tools at a predetermined relative position or by actively causing the pair of attachment tools to operate relative to each other, utilizing a force output by a drive means.

Such a muscular strength assisting apparatus has a switching means such as a brake and a clutch, and when performing muscular strength assistance, the force output by a drive means held by one of the attachment tools is transmitted to the other of the attachment tools through the switching means. Whereas when the muscular strength assistance is not performed, the force output by the drive means is blocked by the switching means, so that the wearer's motion is not restrained by the drive means.

### DISCLOSURE OF INVENTION

The shoulder joint enables motions of the upper arm relative to the trunk about more than one axis, specifically flexion/extension motion, internal/external rotation motion, and adduction/abduction motion. Meanwhile, the muscular strength assisting apparatus situated in the vicinity of an upper arm of a wearer may limit movement of another upper arm of the wearer to which the muscular strength assistance is not performed, in particular, the switching means, whose size structurally tends to be large, is located in a movable range of the upper arm and interfere with the upper arm. The present invention has been made in view of the above-described circumstances, and it is an object to provide a muscular strength assisting apparatus in which limitation on wearer's motion can be reduced

A first muscular strength assisting apparatus according to one aspect of the invention includes a drive means held by a first attachment tool attached to a torso, and a transmission means for transmitting a force output by the drive means to a second attachment tool attached to an upper arm. The transmission means includes an output shaft member coupled to the second attachment tool, and a switching means capable of switching between transmission and interruption of the force from the drive means to the output shaft member, and the switching means is disposed on a rear, upper or laterally outer side of the output shaft member.

In the first muscular strength assisting apparatus according to one aspect of the invention, the switching means may be disposed on the rear side of the output shaft member.

In the first muscular strength assisting apparatus according to one aspect of the invention, the first attachment tool may include a center frame attached to the torso at a position facing a back, and a side frame rotatable relative to the center frame, and the switching means may be supported by the side frame.

In the first muscular strength assisting apparatus according to one aspect of the invention, a portion of the drive means coupled to the transmission means may be supported by the side frame.

In the first muscular strength assisting apparatus according to one aspect of the invention, the transmission means may further include a shaft member disposed between the output shaft member and the switching means along a force transmission path, the shaft member being rotatable about a rotation axis that is not parallel to a rotation axis of the output shaft member.

A second muscular strength assisting apparatus according to another aspect of the invention includes a drive means held by a first attachment tool attached to a torso, and a switching means capable of switching between transmission and interruption of a force output by the drive means to the second attachment tool The switching means is disposed on a rear, upper or laterally outer side of a shoulder joint.

In the second muscular strength assisting apparatus according to one aspect of the invention, the switching means may be disposed on the rear side of the shoulder joint.

In the first and second muscular strength assisting apparatus, the switching means may include a first member coupled to the second attachment tool, and a second member coupled to the drive means and capable of moving close to and away from the first member. The first member is held rotatably relative to the first attachment tool, and the second member may be contactable with the first member from a radial direction about a rotation axis of the first member.

According to the aspects of the invention, it is possible to reduce restriction on motions of the wearer.

### BRIEF DESCRIPTION OF THE DRAWINGS

Fig. 1 is a perspective view showing a muscular strength assisting apparatus together with a wearer wearing the same for explaining one embodiment of the invention.
Fig. 2 is a perspective view showing the muscular strength assisting apparatus shown in Fig. 1.
Fig. 3 is a view showing, from a forward side, part of the muscular strength assisting apparatus shown in Fig. 1.
Fig. 4 is a view showing, from a lateral outer side, a part of the muscular strength assisting apparatus shown in Fig. 1.
Fig. 5 is a view showing, from a rear side, a part of the muscular strength assisting apparatus shown in Fig. 1.
Fig. 6 illustrates a drive force transmission mechanism of the muscular strength assisting apparatus shown in Fig. 1.
Fig. 7 is a view showing, from the lateral outer side, the main part of a position control device of the muscular strength assisting apparatus.
Fig. 8 is a view showing, from the lateral outer side, a main part of the position control device of the muscular strength assisting apparatus in a state different from the state shown in Fig. 7.
Fig. 9 is a view showing, from the lateral outer side, a main part of the position control device of the muscular strength assisting apparatus in a state different from the state shown in Figs. 7 and 8.
Fig. 10 is a perspective view showing the muscular strength assisting apparatus 10 together with a wearer wearing the same for describing a modification example.
Fig. 11 is a view showing, from a front side, a part of the muscular strength assisting apparatus shown in Fig. 10.
Fig. 12 is a view showing, from the lateral outer side, a part of the muscular strength assisting apparatus shown in Fig. 10.

### MODE FOR CARRING OUT THE INVENTION

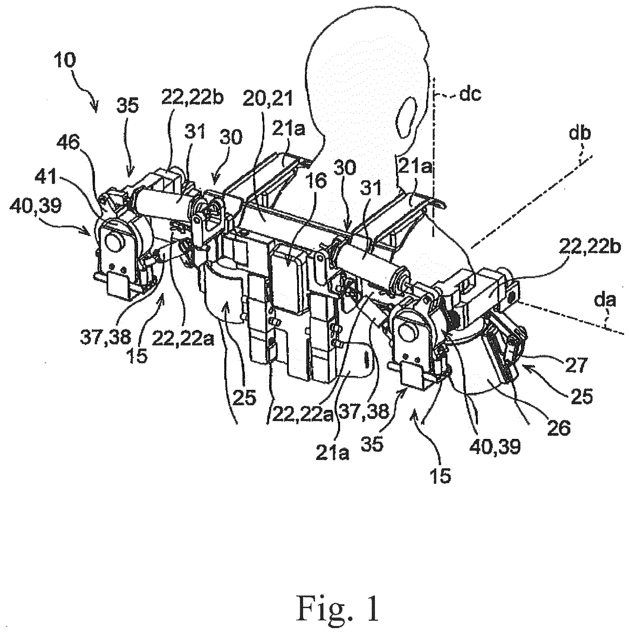

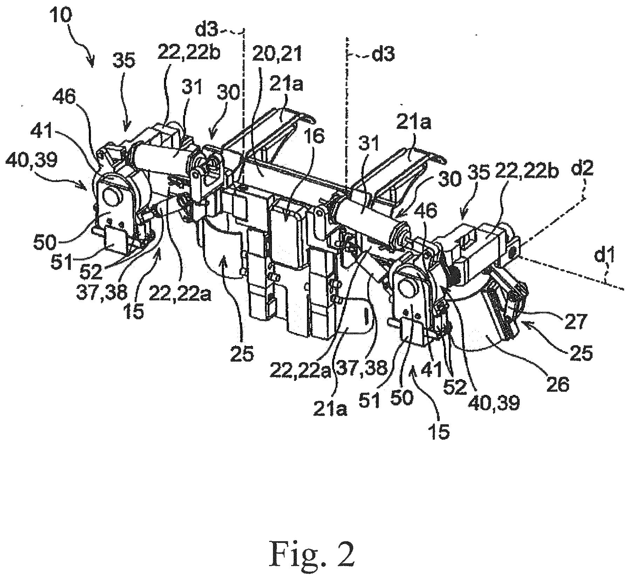

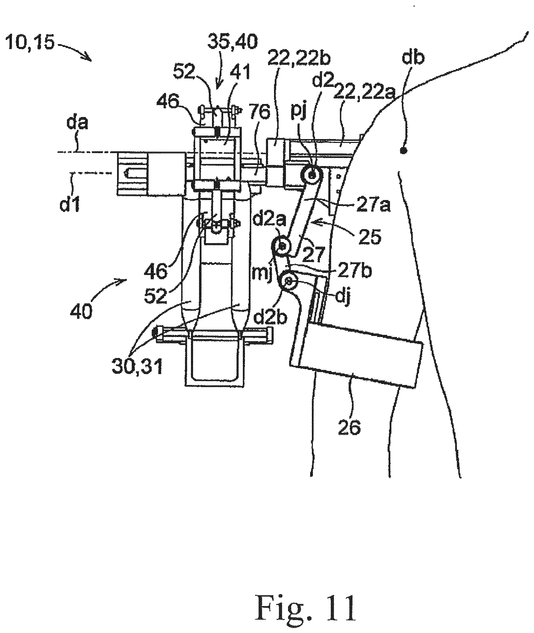

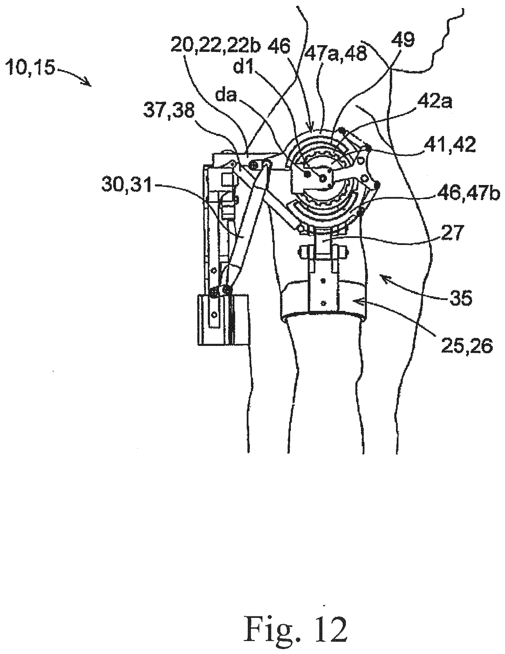

Hereinafter, one embodiment of the present invention will be described with reference to the appended drawings. Fig. 1 to Fig. 12 are views for describing one embodiment of the invention and modification examples thereof. Among these drawings, Fig. 1 and Fig. 2 are perspective views showing a muscular strength assisting apparatus 10 in its entirety, and Fig. 1 in particular shows a state where the muscular strength assisting apparatus 10 is worn on a human body. The muscular strength assisting apparatus 10 includes a first attachment tool 20 and a second attachment tool 25 rotatable relative to each other about a first rotation axis d1, and a position control device 15 that controls a relative position between the first attachment tool 20 and the second attachment tool 25, in other words, a rotational position of the second attachment tool 25 with respect to the first attachment tool 20. The position control device 15 includes a drive means 30 held by the first attachment tool 20, a transmission means 35 for transmitting a force output by the drive means 30 to the second attachment tool 25, and a control unit 16 for controlling the drive unit 30 and the transmission means 35. As shown in Fig. 1, the first attachment tool 20 and the second attachment tool 25 are mounted to two parts of a human body connected together via a joint, which are a torso and an upper arm. The position control device 15 controls the relative positions of the first attachment 20 and the second attachment 25 to assist in maintaining a relative position of the upper arm with respect to the torso and/or a relative motion of the upper arm with respect to the torso. In particular, the muscular strength assisting apparatus 10 described herein is designed to reduce restriction on wearer's motion.

As shown in Fig. 1, a shoulder joint enables a flexion/extension motion in which the upper arm is rotated relative to the torso about a flexion/extension axis da, an adduction/abduction motion in which the upper arm is rotated relative to the torso about an adduction/abduction axis db, and an internal/external rotation motion in which the upper arm is rotated relative to the torso about an internal/external rotation axis dc. Further, as will be mentioned later, the muscular strength assisting apparatus 10 shown assists in retaining the upper arm at a predetermined position so as to prevent the upper arm from coming down and further assists a flexion motion in which the upper arm is lifted forward At the same time, as will be described later, the muscular strength assisting apparatus 10 is devised so as not to restrict the adductor and abduction rotational motions and the internal and external rotation motions of the upper arm.

In the illustrated example, the position control device 15 has an output shaft 76 as an output member that outputs the drive force. The output shaft member 76 is rotatable relative to the first attachment tool 20 about the first rotation axis d1. The output shaft member 76 is connected to the second attachment tool 25. The first rotation axis d1 acting as the rotation axis of the output shaft member 76 is provided so as to correspond to the flexion/extension axis da of a shoulder. The second attachment tool 25 rotates relative to the first attachment tool 20 about the first rotation axis d1, thus enabling a flexion motion and an extension motion of the upper arm about the shoulder joint.

The muscular strength assisting apparatus according to the present invention is not limited to the example shown and may assist any one or more of a flexion motion, an extension motion, an adduction motion, an abduction motion, an internal rotation motion, and an external rotation motion.

With reference to specific examples shown in the drawings, each component will be now described. In Figs. 1 to 12 referred to below, in order to facilitate understanding, constituent elements shown in one drawing may be omitted in other drawings.

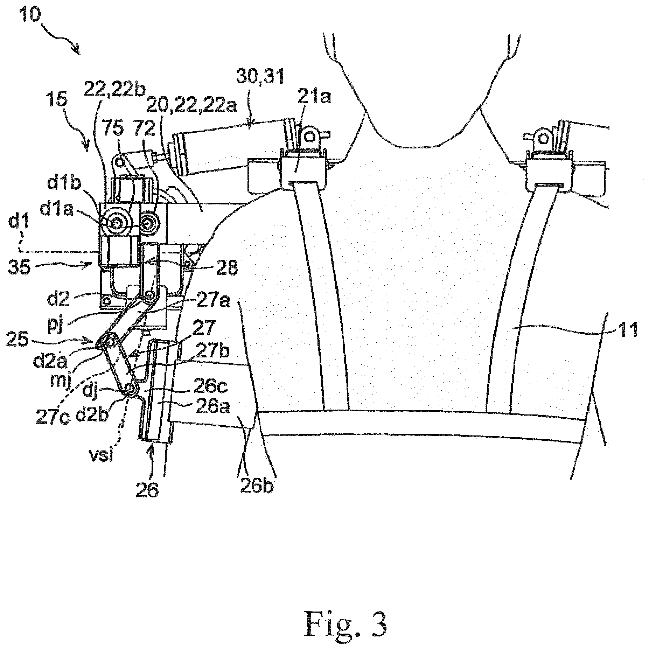

First, a description is given of the first attachment tool 20. As shown in Figs. 1 and 2, the first attachment tool 20 has a center frame 21 and a side frame 22. The center frame 21 is provided with a belt holding portion 21a to which a fixing belt 11 (Figs. 3 to 5) is attached The center frame 21 is attached via the fixing belt 11 to the torso of a wearer, for example, at a position facing the back. The side frame 22 extends outward in a transverse direction from the center frame 21. The side frame 22 includes a rear frame portion 22a connected to the center frame 21 and a front extending frame portion 22b extending forward from the lateral outer end of the rear frame portion 22a. The rear frame portion 22a is disposed at a position facing the shoulder from the rear. The front extending frame portion 22b is disposed at a position facing the shoulder from the outer lateral side. The side frame 22 is connected so as to be rotatable relative to the center frame 21 about a third rotation axis d3. The third rotation axis d3 is provided so as to correspond to the internal/external rotation axis dc of the shoulders. The side frame 22 rotates relative to the center frame 21 about the third rotation axis d3, thus enabling an internal rotation motion and an external rotation motion of the upper arm about the shoulder joint.

The illustrated muscular strength assisting apparatus 10 that assists movements of the upper arm(s), is configured to act on both the upper arms. Specifically, the side frame 22 is provided on each lateral side of the center frame 21. The transmission means 35 of the position control device 15 and so on are supported on each side frame 22. In addition, the second attachment tool 25 is provided corresponding to each side frame 22. A pair of elements provided respectively at each side of the center frame 21 are disposed symmetrical to each other and yet may be configured in the same manner in other respects. Therefore the following description and Fig. 3 to Fig. 12 are based on a configuration in which the muscular strength assisting apparatus 10 acts on the right shoulder.

Furthermore, the terms used herein, such as
"front," "rear," "upper," "lower," and "a transverse direction," are assumed to refer to corresponding directions "front," "rear," "upper," "lower," and "a transverse direction" with reference to the wearer wearing the muscular strength assisting apparatus 10. Moreover, a "width direction" herein refers to the "transverse direction."

Next, a description is given of the second attachment tool 25. Fig. 3 shows the second attachment tool 25 from the front side (anterior view). The second attachment tool 25 is connected to the output shaft member 76 of the transmission means 35, which will be detailed later. As the output shaft member 76 rotates, the second attachment tool 25 rotates about the first rotation axis d1 that is the rotation axis of the output shaft member 76. The second attachment tool 25 has the attachment portion 26 attached to the human body, an working portion 28 fixed to the output shaft member 76, and a coupling portion 27 coupling the attachment portion 26 and the working portion 28. The working portion 28 receives a force generated by the drive means 30 from the output shaft member 76 that is disposed at the most downstream (closest to the output) of the transmission means 35. The coupling portion 27 couples the working portion 28 to the attachment portion 26 such that attachment portion 26 rotates relative to the first attachment tool 20 as the output shaft member 76 rotates relative to the first attachment tool 20.

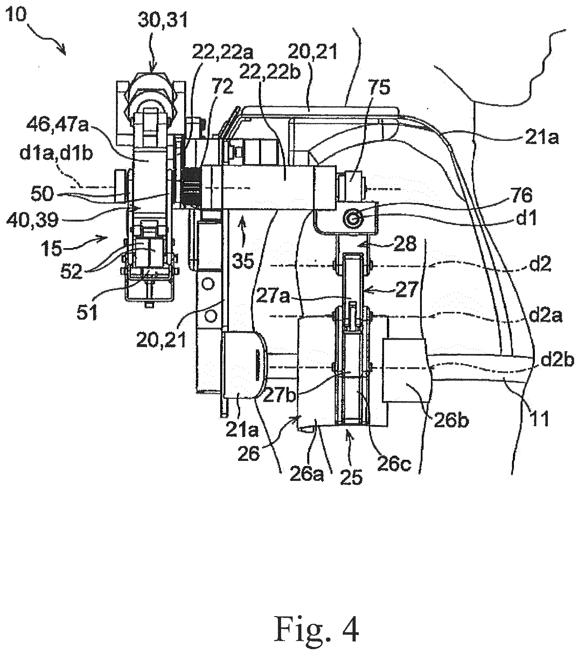

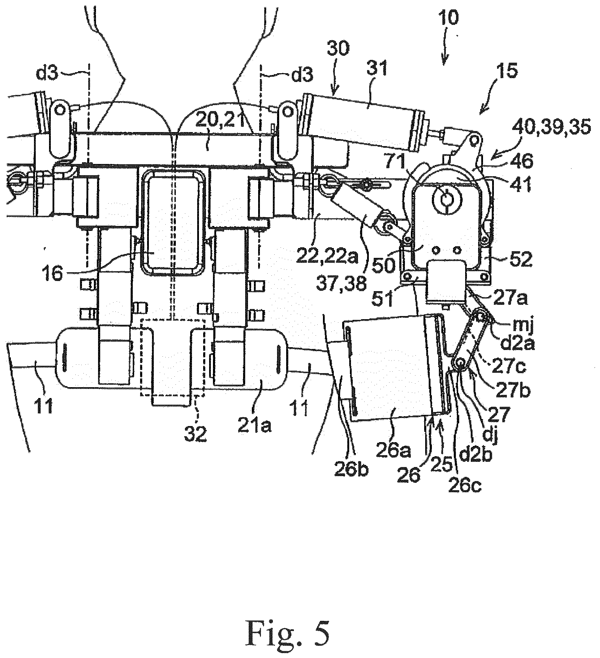

In the example shown, the attachment portion 26 is attached to the upper arm of the human body. In order to efficiently transfer a force supplied from the position control device 15 to the upper arm, preferably, the attachment portion 26 is configured such that its relative movement with respect to the upper arm in a direction of movement caused by rotation about the first rotation axis d1 is restricted In particular, when the muscular strength assisting apparatus assists a lifting motion (flexion motion) of an upper arm, it is preferable to effectively restrict a rearward movement of the upper arm relative to the attachment portion 26. As is well illustrated in Fig. 3, the attachment portion 26 includes a belt holding portion 26a and an arm belt 26b forming a tubular portion into which an upper arm is inserted, and a bracket 26c connected to the coupling portion 27. The belt holding portion 26a and the bracket 26c are made of, for example, a highly rigid resin molded product or the like. In the illustrated example, the belt holding portion 26a and the bracket 26c are integrally formed into a single body. As shown in Figs. 4 and 5, the belt holding portion 26a is disposed at a position facing the upper arm from the rear. The arm belt 26b is made of a flexible belt material and is disposed at a position facing the upper arm mainly from the front. By adjusting the length of the belt holding portion 26a, the attachment portion 26 can stably hold the upper arm.

In order to transmit the force supplied from the position control device 15 to the attachment portion 26, the coupling portion 27 connects the attachment portion 26 and the working portion 28 such that the attachment portion 26 and the working portion 28 do not rotate relative to each other about the first rotation axis d1. That is, since the second attachment tool 25 receives a rotational force about the first rotation axis d1 from the position control device 15, excepting a backlash or elastic deformation of the elements themselves, the working portion 28 that receives the rotational force from the position control device 15 and the attachment portion 26 that exerts an assisting force on the human body are disposed so as not to move relative to each other in the direction of the force input by the position control device 15, that is, in a circumferential direction around the first rotation axis d1.

In the illustrated example, the coupling portion 27 is connected to the working portion 28 so as to be rotatable relative to the working portion 28 about the second rotation axis d2 perpendicular to the first rotation axis d1. The second rotation axis d2 is provided so as to correspond to the internal/external rotation axis db of a shoulder. The coupling portion 27 rotates relative to the working portion 28 about the second rotation axis d2, thus enabling the internal rotation motion and the external rotation motion of the upper arm about the shoulder joint.

For the purpose of reducing a wearer's restraint feeling, it is preferable that the coupling portion 27 be configured to couple the attachment portion 26 and the working portion 28 such that the distance between the first rotation axis d1 and the attachment portion 26 is changeable in projection onto a surface orthogonal to the first rotation axis d1. Further, to reduce the wearer's restraint feeling, the coupling portion 27 is configured to couple the attachment portion 26 and the working portion 28 such that the second attachment tool 25 forms a mechanism having three degrees of freedom between the working portion 28 and the attaching portion 26. As is well understood from Fig. 3, in the illustrated example, the coupling portion 27 includes a first link 27a operably coupled to the working portion 28, and a second link 27b operably coupled to the first link 27a and the attachment portion 26. According to this coupling portion 27 thus described, the configuration extending from the working portion 28 to the attachment portion 26 enables actions with three degrees of freedom. In other words, the attachment portion 26 can perform relative movements with three degrees of freedom relative to the working portion 28.

In the example shown in Figs. 3 to 5, the first link 27a and the second link 27b are connected so as to be rotatable relative to each other about a first coupling rotation axis d2a. The first coupling rotation axis d2a is perpendicular to the first rotation axis d1 and is parallel to the second rotation axis d2. The second link 27b and the attachment portion 26 are connected so as to be rotatable relative to each other around a second coupling rotation axis d2b. The second coupling rotation axis d2b is perpendicular to the first rotation axis d1 and is parallel to the second rotation axis d2.

Further, as shown in Fig. 3, in a plane orthogonal to the second rotation axis d2, a connection position mj (hereinafter also referred to as "intermediate connection position") between the first link 27a and the second link 27b of the coupling portion 27 is always situated on one side with respect to a virtual straight line vsl that passes through a connection position pj (hereinafter also referred to as "proximal-side connection position") between the coupling portion 27 and the working portion 28 and a connection position dj (hereinafter also referred to as "distal-side connection position") between coupling portion 27 and the attachment portion 26. Particularly in the example shown, structurally, the intermediate connection position mj is set so as to be always on one side with respect to the virtual straight line vsl passing through the proximal end side connection position pj and the distal end side connection position dj. This means that, even in a case where the coupling portion 27 is extended so that both ends thereof are maximally separated from each other, the intermediate connection position mj does not reach to the virtual straight line vsl. Further, in the illustrated example, the intermediate connection position mj is located on the same side as the output shaft member 76 with respect to the virtual straight line vsl. As shown in Fig. 3, the intermediate connection position mj, together with the output shaft member 76, is located on an opposite side to the human body with respect to the virtual straight line vsl. According to this configuration, it is possible to effectively avoid a situation where, when the coupling portion 27 is contracted, an intermediate portion of the coupling portion 27 makes contact with the human body.

In the example shown in Fig. 3, the coupling portion 27 has a biasing member 27c that serves as a bias member. The biasing member 27c is arranged so as to extend over the first link 27a and the second link 27b. The biasing member 27c lifts the second link 27b and the attachment portion 26 to some extent against the weight of the second link 27b and the attachment portion 26, so that the first link 27a and the second link 27b are maintained in a bent state as illustrated in Fig. 3. From the state shown in Fig. 3, the coupling portion 27 is capable of bending so as to lengthen the distance between both ends thereof as well as bending so as to shorten the distance.

Alternatively, unlike in the example shown, when the coupling portion 27 is maximally extended, the coupling portion 27 may be located on the virtual straight line vsl, or the intermediate connection position mj may be located on either side with respect to the virtual straight line vsl. In the muscular strength assisting apparatus 10 configured as above, preferably, provided that the coupling portion 27 is maximally extended when the muscular strength assisting apparatus 10 is worn on the human body during actual use, the intermediate connection position mj is located on one side with respect to the virtual straight line vsl, particularly, on the same side as the output shaft member 76, which is an opposite side to the human body. In this case, it is possible to effectively avoid a situation where, during use of the muscular strength assisting apparatus 10, the intermediate portion of the coupling portion 27 makes contact with the human body.

Next, a description is given of the position control device 15. As described above, the position control device 15 controls the relative positions of the first attachment tool 20 and the second attachment tool 25. The position control device 15 includes a drive means 30 held by the first attachment tool 20, a transmission means 35 for transmitting a force output by the drive means 30 to the second attachment tool 25, and a control unit 16 for controlling the drive unit 30 and the transmission means 35. The control unit 16 detects a motion of the wearer, for example, by a detection means (not shown) provided in the second attachment tool 25, and based on the detection result or based on an external input from the wearer or the like as another example, transmits a control signal to control operations of the drive means 30 and the transmission means 35.

First, the drive means 30 will be now described The drive means 30 includes a so-called actuator to output a force to the transmission means 35. In the illustrated example, the position control device 15 has an extendable actuator, in other words, a linear actuator 31 whose longitudinal length is changeable. As shown in Fig. 5, the actuator 31 is connected, at its one end, to the transmission means 35. The actuator 31 is connected, at its other end, to an upper end of the side frame 22 (the rear frame portion 22a) of the first attachment tool 20. Depending on the drive force required by the drive means 30, a plurality of actuators 31 may be provided

An expandable and contractible member under a fluid pressure can be used for the actuator 31. As one specific example, McKibben artificial muscles known as a fluid pressure-type actuator can be used as the actuator 31. When formed of McKibben artificial muscles, the actuator 31 is supplied inside with a fluid (typically, a gas) and thus becomes increased in diameter and contracted As a result of the contraction, the actuator 31 generates a contraction force. In the illustrated example, the drive means 30 has a fluid source (a fluid pressure source) 32 that can supply a fluid to the actuator 31. As shown in Fig. 5, the fluid pressure source 32 configured as, for example, a compressor is supported by the center frame 21 of the first attachment tool 20.

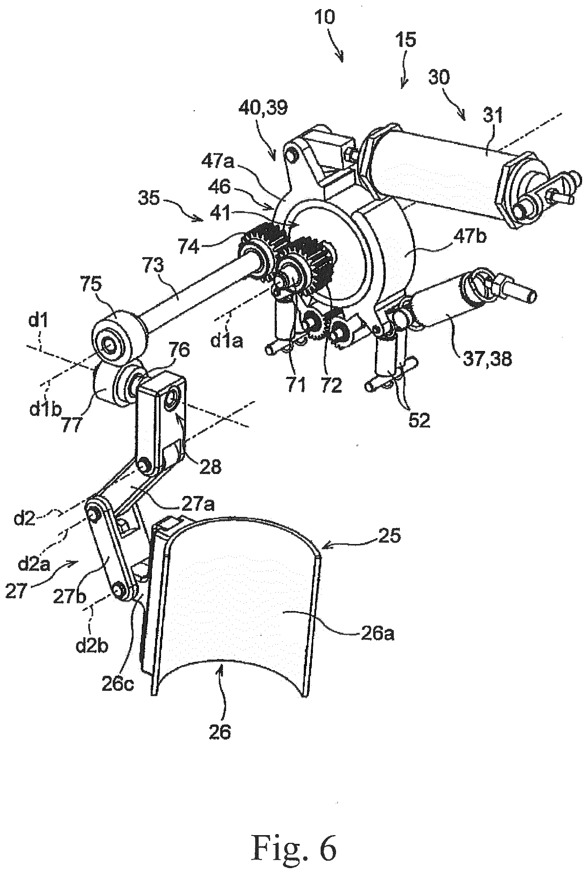

Next, a description is given of the transmission means 35. The transmission means 35 transmits a force output by the drive means 30 to the second attachment tool 25. As shown in Fig. 6, the transmission means 35 described here includes a switching means 40 for switching between transmission and blocking of the force output by the drive means 30 to the second attachment tool 25. Fig. 6 is a perspective view showing the structure of the transmission means 35 together with the actuator 31 and the second attachment tool 25. In Fig. 6, in order to facilitate understanding, the first attachment tool 20 and the like are omitted.

The switching means 40 includes a first member 41 and a second member 46, and functions as a drum brake mechanism 39 as described in detail later. The first member 41 is supported by the side frame 22 of the first attachment tool 20, in particular, the rear frame portion 22a, such that it is rotatable about a first intermediate rotation axis dla. The second member 46 is connected to one end of the actuator 31 that moves linearly. The first member 41 and the second member 46 can be brought close to each other and separated from each other. That is, the first member 41 and the second member 46 are capable of moving away from each other and move towards each other. In particular, in the illustrated example, the first member 41 and the second member 46 can be situated at a relative position spaced apart from one another and a relative position in contact with each other. The first member 41 can rotate without being restrained by the second member 46 at a position separated from the second member 46. The second member 46 retains the rotational position of the first member 41 while contacting with the first member 41. In other words, the second member 46 regulates a relative motion, in particular, a relative rotation, between the second member 46 and the first member 41 in a state of being in contact with the first member 41.

In the illustrated example, the first member 41 is coupled to the second attachment tool 25. Here, coupling of the first member 41 and the second attachment tool 25 means that the first member 41 moves in conjunction with the second attachment tool 25, more specifically, the second attachment tool 25 moves in accordance with the movement of the first member 41. Therefore, by adjusting the relative position between the first member 41 and the second member 46, it is possible to maintain an upper arm of the wearer at a predetermined position via the second attachment tool 25. Further, as will be described later, by rotating the first member 41 together with the second member 46, it is possible to assist the wearer's upper arm's motion via the second attachment tool 25.

A specific configuration of the switching unit 40 will be described later, and elements other than the switching means 40 of the transmission means 35 will be firstly described with reference mainly to Fig. 6. In the example shown in Fig. 6, the transmission means 35 includes, in addition to the switching means 40, a first relay shaft member 71 connected to the first member 41 of the switching means 40, a second relay shaft member 73 moving in conjunction with the first relay shaft member 71, and the output shaft member 76 moving in conjunction with the second relay shaft member 73.

The first relay shaft member 71 is held by the rear frame portion 22a, which is a part of the side frame 22 of the first attachment tool 20. The first relay shaft member 71 is disposed rotatably about the first intermediate rotation axis dla. The first member 41 is fixed to the first relay shaft member 71. Thus, the first member 41 is supported by the rear frame portion 22a of the side frame 22 and rotates about the first intermediate rotation axis d1a in synchronization with the first relay shaft member 71. A first transmission gear 72 is fixed to the first relay shaft member 71. The first transmission gear 72 is, for example, a spur gear.

The second relay shaft member 73 is held by the front extending frame portion 22b, which is a part of the side frame 22 of the first attachment tool 20. The second relay shaft member 73 is disposed rotatably about a second intermediate rotation axis d1b. A second transmission gear 74 is fixed to the second relay shaft member 73. The second transmission gear 74 is disposed in the vicinity of one end (rear end portion) of the second relay shaft member 73. The second transmission gear 74 is engaged with the first transmission gear 72, so that the second relay shaft member 73 is interlocked with the first relay shaft member 71. The second transmission gear 74 has a configuration corresponding to the first transmission gear 72, and may be configured as, for example, a spur gear. In the illustrated example, the second intermediate rotation axis d1b, which is the rotation axis of the second relay shaft member 73, is disposed parallel to the first intermediate rotation axis dla which is the rotation axis of the first relay shaft member 71. A third transmission gear 75 is fixed in the vicinity of the other end (front end portion) of the second relay shaft member 73. Although not shown, the third transmission gear 75 is configured as, for example, a helical gear.

Similarly to the second relay shaft member 73, the output shaft member 76 is held by the front extending frame portion 22b. As described above, the output shaft member 76 is held so as to be rotatable about the first rotation axis d1. A fourth transmission gear 77 is fixed to the output shaft member 76. The fourth transmission gear 77 is disposed in the vicinity of one end (outer end portion) of the output shaft member 76. The fourth transmission gear 77 is threadably coupled with the third transmission gear 75 thereby the output shaft member 76 moves in conjunction with the second relay shaft member 73, the first relay shaft member 71, and the first member 41 of the switching means 40. The fourth transmission gear 77 has a configuration corresponding to the third transmission gear 75, and may be configured as, for example, a spur gear. In the illustrated example, the first intermediate rotation axis dlb, which is the rotation axis of the output shaft member 76, is disposed perpendicular to the second intermediate rotation axis d1b which is the rotation axis of the second relay shaft member 73 with some offset in the height direction. The other end (inner end portion) of the output shaft member 76 is fixed to the working portion 28 of the second attachment tool 25.

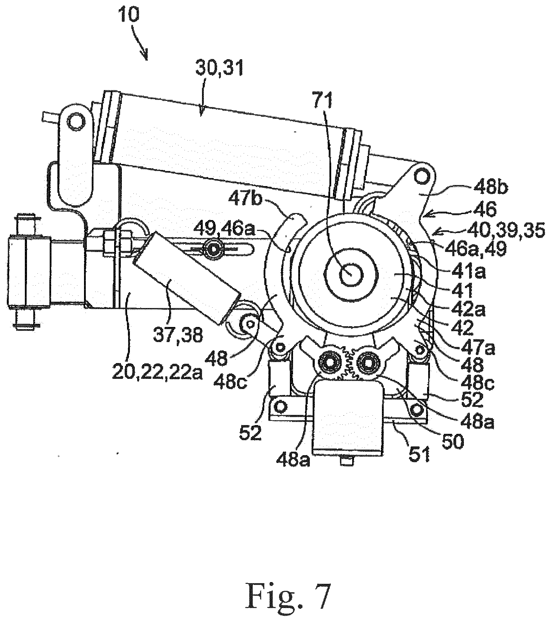

Next, with reference mainly to Figs. 7 to 9, details of the switching means 40 will be described In the illustrated example, the switching means 40 is held on the side frame 22 as shown in Fig. 4. The switching means 40 is disposed on the side opposite to the human body side of the side frame 22, that is, on the rear side of the side frame 22. As shown in Fig. 4, the switching means 40 is situated behind the output shaft 76 that is disposed on the most downstream side of the transmission means 35 and is situated on the rear side of the shoulder joint of the wearer wearing the muscular strength assisting apparatus 10.

First, a description is given of the first member 41. Referring to Fig. 7, the first member 41 includes a rotary drum 42 fixed to the first relay shaft member 71. The rotary drum 42 has a disk-like outer diameter, and the central axis of the rotary drum 42 is situated on the first intermediate rotation axis dla which is the rotation axis of the first relay shaft member 71. The rotary drum 42 is held by the rear frame portion 22a of the side frame 22 via the first relay shaft member 71. The plate face of the rotary drum 42 is aligned with the planar direction of the rear frame portion 22a. Therefore, it is possible to effectively prevent the rotating drum 42 from largely protruding out from the body of the wearer. The rotary drum 42 has a friction layer 42a on its surface. The friction layer 42a is a portion supposed to contact with the second member 46 which will be hereunder described. The friction layer 42a may be formed of rubber or the like that generates a large friction force between itself and the second member 46.

Next, the second member 46 and configurations related to the second member 46 and will be described As shown in Figs. 7 to 9, the second member 46 includes a first swing member 47a and a second swing member 47b. The first swing member 47a is connected to the actuator 31 via the bracket 48b. Further, the switching means 40 has a pair of support members 50 formed in a plate shape. The second member 46 (the swing members 47a, 47b) is movably supported by the pair of support members 50, more specifically, swingably supported. As shown in Fig. 4, the pair of support members 50 are arranged in a direction parallel to the first intermediate rotation axis dla, and the rotation drum 42 and the pair of swing members 47a, 47b are disposed between the pair of support members 50. The rotary drum 42 is rotatable relative to the support members 50 about the first intermediate rotation axis dla. That is, the rotary drum 42 is rotatable relative to the support members 50 between the pair of support members 50. In Figs. 7 to 9, the support member 50 on the near side is omitted.

As shown in Figs. 7 to 9, the swing members 47a and 47b each have an arcuate outer shape. The swing members 47a, 47b are each swingable relative to the support members 50 about one end portion thereof. The swinging axes of the swing members 47a, 47b are parallel to the first intermediate rotation axis dla. In the space between the pair of support members 50, the rotary drum 42 is disposed between the pair of swing members 47a, 47b. The swing members 47a, 47b face the rotary drum 42 of the first member 41 from an outer side in the radial direction about the first intermediate rotation axis dla. A large part of an outer peripheral surface of the rotary drum 42 is covered by the pair of swing members 47a, 47b. The swing members 47a, 47b swing relative to the support members 50 and thus can come in contact with the rotary drum 42 from the outer side in the radial direction about the first intermediate rotation axis dla. In this way, the first member 41 and the second member 46 form the drum brake mechanism 39. The swinging members 47a, 47b included in the second member 46 has an arcuate body portion 48 and a friction body 49 that forms a second contact surface 46a contacting with the first member 41. The friction body 49 makes contact with the friction layer 42a of the rotary drum 42 and thus generates a friction force between itself and the friction layer 42a. The friction body 49a is formed of a material that produces a sufficient frictional force, for example, rubber or the like.

Further, in the illustrated example, the switching means 40 further includes a bias member 52 as biasing means for urging the swing members 47a, 47b to separate from the rotating drum 42. The bias member 52 is disposed between a support base 51 fixed to the support member 50 and a bracket 48c of the respective swing members 47a, 47b. In the illustrated example, the bias member 52 is formed by a tension spring.

Further, the body portion 48 including the swing members 47a, 47b has timing gears 48a. Swinging motions of the pair of swing members 47a, 47b are adjusted by the timing gears 48a. More specifically, the pair of timing gears 48a are engaged with each other and thereby the pair of swing members 47a and 47b are moved synchronously and symmetrically with respect to the rotating drum 42. Therefore, when the first swing member 47a is in contact with the rotary drum 42 by an action of the actuator 31, the second swing member 47b also contacts the rotary drum 42. When the first swing member 47a is separated from the rotary drum 42 by an action of the actuator 31, the second swing member 47b is also separated from the rotary drum 42.

In the illustrated example, the support member 50 is supported by the rear frame portion 22a which is a part of the side frame 22 of the first attachment tool 20. Here, the support member 50 is rotatable relative to the rear frame portion 22a. More specifically, the support member 50 is held rotatably relative to the first relay shaft member 71 about the first intermediate rotation axis dla and consequently it is rotatable relative to the rear frame portion 22a. Therefore, the second member 46 supported by the support member 50, the support base 51 fixed to the support member 50 and the like are not fixed to the first attachment tool 20, but they are rotatable relative to the first attachment tool 20 about the intermediate rotation axis dla.

At the same time, the switching means 40 further includes an adjusting means 37 for restricting free rotations of the support members 50 and the second member 46. A balance between the force supplied from the adjusting means 37 and the force supplied from the drive means 30 is used to control the states of the first member 41, the second member 46, and the support members 50. In the illustrated example, the adjusting means 37 is formed as a bias member 38 for urging the support members 50 and the second member 46 in one direction. One end of the bias member 38 is attached to the rear frame portion 22a of the side frame 22 and the other end is attached to the bracket 48c of the second swing member 47b. In the illustrated example, the bias member 38 is formed by a tension spring which serves as the biasing means.

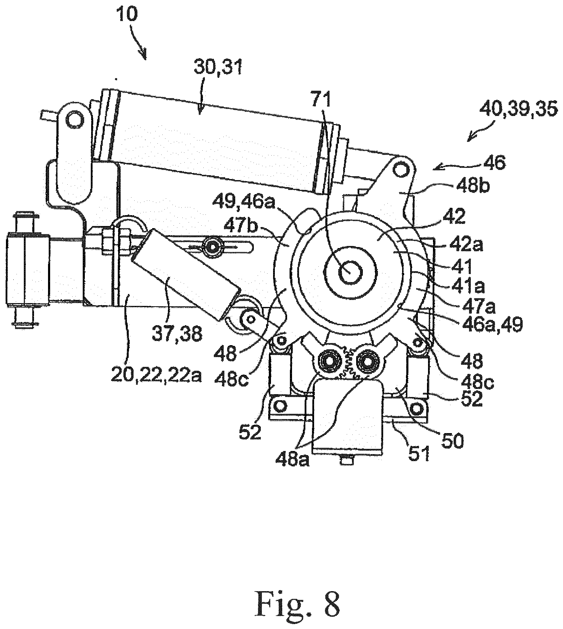

In the illustrated position control device 15, when the actuator 31 contracts from the state shown in Fig. 7, the actuator 31 draws the first swing member 47a that forms the second member 46 as shown in Fig. 8. As a result, the pair of swing members 47a, 47b abut against the rotary drum 42 that forms the first member 41. In the state shown in Fig. 8, the second member 46 retains the first member 41, and thus relative rotation between the second member 46 and the first member 41 is restricted. At this time, the force applied by the actuator 31 is smaller than the biasing force by the bias member 38 that serves as the adjusting means 37. That is, the force required to swing the swing members 47a, 47b included in the second member 46 relative to the support members 50 is higher than the force required to rotate the support members 50 relative to the first attachment tool 20. Therefore, before the support members 50 rotate relative to the first attachment tool 20, the swing members 47a, 47b that form the second member 46 swing relative to the support members 50.

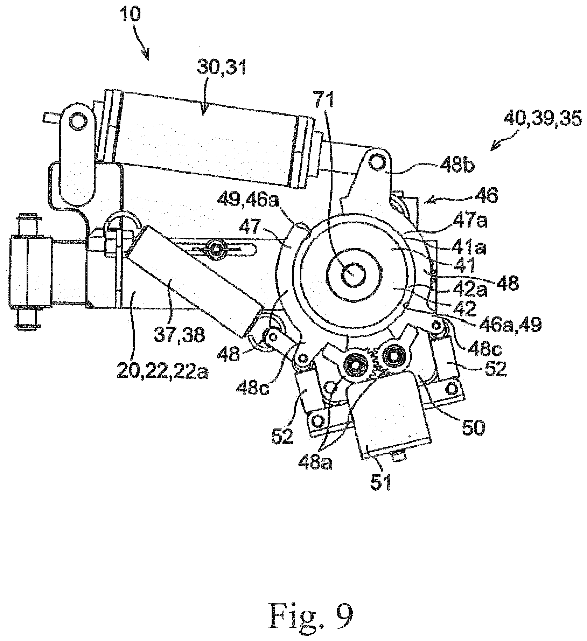

When the actuator 31 further contracts from the state shown in Fig. 8, the actuator 31 tries to further draw the first swing member 47a. When the force output by the actuator 31 becomes larger than the biasing force generated by the bias member 38 that forms the adjusting means 37, the actuator 31 rotates the support members 50 relative to the first attachment tool 20 against the biasing force, thereby further drawing the first swing member 47a as shown in Fig. 9. That is, the force output by the actuator 31 is larger than the force required to rotate the support members 50 relative to the first attachment tool 20. As a result, the second member 46 rotates about the first intermediate rotation axis dla together with the support members 50 and the like. At this time, the first member 41 contacts the second member 46, and its rotation relative to the second member 46 is restricted Therefore, the first member 41 rotates about the first intermediate rotation axis d1a in synchronization with the second member 46.

Movements of the drive means 30 is controlled by the control unit 16. In the example shown in Fig. 1, the control unit 16, together with the fluid source 32, is supported by the center frame 21 of the first attachment tool 20. The control unit 16 controls operation of the actuator 31 by controlling supply of fluid (for example, air) from the fluid source 32 to the actuator 31 and discharge of the fluid from the actuator 31.

Next, a description is given of an operation of the muscular strength assisting apparatus 10 having the above-described configuration.

As shown in Fig. 1, first, the center frame 21 of the first attachment tool 20 is attached to the torso by using the attachment belt 11. Furthermore, the attachment portion 26 of the second attachment tool 25 is attached to the upper arm.

The illustrated muscular strength assisting apparatus 10 may be maintained in either the free rotation mode shown in Fig. 7, the rotation restrained mode shown in Fig. 8, or the rotation drive mode shown in Fig. 9.

First, in the free rotation mode shown in Fig. 7, a fluid inside the actuator 31 is discharged, and thus the actuator 31 is extended Therefore, the swing members 47a, 47b of the second member 46 are not subjected to a force generated by the actuator 31 toward the rotary drum 42 that forms the first member 41. On the other hand, the swing members 47a, 47b included in the second member 46 are urged by the bias member 52 in a direction away from the rotary drum 42 that forms the first member 41. Thus, in the free rotation mode, rotation of the first member 41 about the first intermediate rotation axis dla is not restricted by the second member 46, and the first member 41 can freely rotate about the first intermediate rotation axis dla.

It is to be noted that the second member 46 and the support members 50 supporting the second member 46 receive a force that makes them rotate in the clockwise direction in Fig. 7 by the biasing force (pulling force) of the bias member 38 which serves as the adjusting means 37. However, the force supplied by the adjusting means 37 mainly affects the rotation of the second member 46 and the support members 50 relative to the first attachment tool 20, and less influences the swinging of the second member 46 relative to the support members 50. Therefore, in the free rotation mode, the first member 41 and the second member 46 are separated from each other.

In the free rotation mode, the second attachment tool 25 that moves in conjunction with the first member 41 is freely rotatable with respect to the first attachment tool 20. Thus, the wearer of the muscular strength assisting apparatus 10 can freely rotate the upper arm with respect to the torso about the first rotation axis d1, the attachment portion 26 of the second attachment tool 25 being mounted to the upper arm. That is, the wearer can perform a flexion motion and an extension motion without being restrained by the muscular strength assisting apparatus 10.

Next, in the rotation restrained mode shown in Fig. 8, a fluid is supplied from the fluid source 32 into the actuator 31, and thus the actuator 31 is contracted As the actuator 31 contracts, the drive means 30 acts on the first swing member 47a to draw the first swing member 47a. Referring to Fig. 8, the force applied by the actuator 31 to the first swing member 47a causes the first swing member 47a to move toward the rotary drum 42 of the first member 41. Referring again to Fig. 8, the second contact surface 46a formed of the friction body 49 of the swing members 47a, 47b contacts the first contact surface 41a formed of the friction layer 42a provided as the outer circumferential surface of the rotary drum 42. The second member 46 holds the first member 41 by utilizing the friction force between the friction body 49 and the friction layer 42a. In this manner, the relative rotation between the second member 46 and the first member 41 is restricted, and as a result, rotations of the rotary drum 42 and the output shaft member 76 are restricted.

In the rotation braking mode, relative rotation of the second attachment tool 25 with respect to the first attachment tool 20 is restricted. For example, the muscular strength assisting apparatus 10 assists in maintaining the lifted upper arm at the lifted position and thus can effectively prevent the upper arm from being lowered. Although the second member 46 is connected to the adjusting member 37 and the drive means 30, the second member 46 is still rotatable relative to the first attachment tool 20 together with the support members 50. Thus, the wearer can further lift the upper arm from the state shown in Fig. 8 by rotating the support members 50 against the biasing force of the adjusting means 37.

In the rotation drive mode shown in Fig. 9, a fluid is further supplied from the fluid source 32 into the actuator 31, and thus the actuator 31 is further contracted. As the actuator 31 is further contracted, the drive means 30 further draws the first swing member 47a. While the first swing member 47a is brought in contact with the rotary drum 42, a force exerted from the actuator 31 on the swing member 47a causes the support member 50 to rotate against the biasing force of the adjusting means 37, and the second member 46 is rotated together with the first member 41 about the first intermediate rotation axis dla. In Fig. 9, in a state where relative rotation between the second member 46 and the first member 41 is restricted, the second member 46 and the first member 41 rotate counterclockwise in synchronization with each other.

In the rotation drive mode, the second attachment tool 25 is driven to rotate relative to the first attachment tool 20 in conjunction with the rotation of the first member 41. That is, the muscular strength assisting apparatus 10 assists, for example, to lift the upper arm.

To end the rotation drive mode, the drive means 30 stops applying a drive force that causes the second attachment tool 25 to rotate relative to the first attachment tool 20. At this time, the drive means 30 may continue to supply a drive force that restricts the relative rotation between the first member 41 and the second member 46. That is, after ending the rotation drive mode, a transition may be made to the rotation braking mode instead of the free rotation mode.

Meanwhile, the shoulder joint enables motions of the upper arm with respect to the torso about more than one axis. Therefore, not only the flexion/extension motion of the upper arm about the flexion/extension axis da of which the muscle force is assisted by the muscular strength assisting apparatus, but also the adduction/abduction motion of the upper arm around about the adduction/abduction axis db and the internal/external rotation motion of the upper arm around the internal/external rotation axis dc are also possible. Therefore, in a state where the muscular strength assisting apparatus is worn by the wearer, some of the components of the muscular strength assisting apparatus are situated within the movable range of the upper arms, especially within the movable range of the upper arm of which muscle force is not assisted by the apparatus, which may hamper motions of the upper arm.

In this respect, according to the embodiment, the muscular strength assisting apparatus 10 includes the drive means 30 held by the first attachment tool 20 mounted on the torso of a wearer, and the transmission means 35 for transmitting a force output by the drive means 30 to the second attachment tool 25 mounted on an upper arm of the wearer. The transmission means 35 has the output shaft member 76 connected to the second attachment tool 25, and the switching means 40 capable of switching between transmission and interruption of the force from the drive means 30 to the output shaft member 76. The switching means 40 is configured to be situated on the rear of the output shaft member 76. Generally, a movable range of the upper arm in the flexion/extension motion, the adduction/abduction motion, and the internal/external rotation motion largely extends in the front, downward, and laterally inward of the shoulder joint. Therefore, among the components of the muscular strength assisting apparatus 10, by disposing the switching means 40, which tends to be made relatively large in size, on the rear, upper, or laterally outer side of the output shaft member 76, it is possible to effectively prevent the switching means 40 from obstructing not only muscular force assisted motions but also unassisted motions of the arms. Therefore, according to the embodiment described above, the switching means 40 is situated on the rear side of the output shaft member 76, and it is possible to avoid that the switching means 40 largely enters the movable range of the upper arm. In this way, it is possible to reduce the restrictions imposed on the wearer by attaching the muscular strength assisting apparatus 10 according to the embodiment. Further, the switching means 40 disposed on the rear side can be placed not in a position distant from the wearer but, for example, in the vicinity of the back of the wearer. In this case, since an inertial force generated during the operation of the switching means 40 can be effectively reduced, the attachment state of the muscular strength assisting apparatus 10 to the back of the wearer is stabilized, whereby the muscular strength assisting force can be stably and effectively applied on the wearer by using the muscular strength assisting apparatus 10.

Further, according to the embodiment, the muscular strength assisting apparatus 10 includes the drive means 30 held by the first attachment tool 20 mounted on the torso of a wearer, and the switching means 40 capable of switching between transmission and interruption of the force output by the drive means 30 to the second attachment tool 25 mounted on an upper arm of the wearer. The switching means 40 is configured to be situated on the rear side of the output shaft member 76. As described above, the shoulder joint situated between the torso to which the first attachment tool 20 is attached and the upper arm to which the second attachment tool 25 is attached enables motions of the upper arm relative to the torso about the axes da, db, dc, more specifically, the flexion/extension motion, the adduction/abduction motion, and the internal/external rotation motion. In many cases of such motions, a movable range of the upper arm extends in the forward, downward, and laterally inward of the shoulder joint. Therefore, by disposing the switching means 40, which tends to be made relatively large in size, on the rear, upper, or laterally outer side of the shoulder joint, it is possible to effectively prevent the switching means 40 from obstructing not only muscular force assisted motions but also unassisted motions of the arms. According to the embodiment described above, it is possible to reduce the limitation to which the wearer is subjected.

Furthermore, according to the embodiment, the first attachment tool 20 includes the center frame 21 attached to the torso of the wearer at a position facing the back of the wearer, and the side frame 22 rotatable relative to the center frame 21. The switching means 40 is supported by the side frame 22. According to this configuration, the switching means 40 can move together with the side frame 22 in accordance with motions of the shoulder (for example, the adduction/abduction motion) other than the motion whose muscle force is assisted (the flexion motion, in the above example). Therefore, even when the upper arm performs a motion different from the motion to be assisted, it is still possible to maintain the relative positional relationships of the components from the switching means 40 to the output shaft member 76 connected to the second attachment tool 25. Consequently, it is possible to more stably transmit a muscular strength assisting force to the second attachment tool 25 via the transmission means 35 including the switching means 40. In addition, the switching means 40 can move in accordance with a motion of the upper arm as the side frame 22 supporting the switching means 40 rotates relative to the center frame 21. Therefore, it is possible to more effectively prevent the switching means 40 from obstructing motions of the upper arm.

Furthermore, according to the embodiment, the portion of the drive means 30 connected to the transmission means 35 is supported by the side frame 22. That is, according to this configuration, since the portion of the drive means 30 connected to the transmission means 35 and the transmission means 35 are both supported by the side frame 22, it is possible to stably output an assisting force from the drive means 30 to the position control device 15 without being affected by the relative rotation between the side frame 22 and the center frame 21. This makes it possible to more stably transmit the muscular strength assisting force from the drive means 30 to the second attachment tool 25 via the transmission means 35.

Furthermore, according to the embodiment, the transmission means 35 includes the second relay shaft member 73 disposed between the output shaft member 76 and the switching means 40 along the force transmission path. The second relay shaft member 73 is rotatable about the rotation axis d1b that is not parallel to the rotation axis d1 of the output shaft member 76, in particular, perpendicular to the rotation axis d1. By providing the second relay shaft member 73 as described above, it is possible to more effectively prevent the switching means 40 from interfering with the upper arm in motion.

Furthermore, according to the embodiment, the switching means 40 includes the first member 41 coupled to the second attachment tool 25, and the second member 41 coupled to the drive means 30 and capable of moving close to and away from the first member 41. The first member 41 is held so as to be rotatable relative to the first attachment tool 20. The second member 46 is configured to be contactable with the first member 41 from the radial direction about the rotation axis dla of the first member 41. The switching means 40 can function as the drum brake mechanism 39. In this switching unit 40, when the diameter of the first member 41 is increased, a friction force generated between the first member 41 and the second member 46 can be increased and thereby it is possible to more reliably transmit the force. In the embodiment, since the disposition of the switching means 40 is well considered, even if the first member 41 has a large diameter, it is possible to effectively prevent the switching means 40 from interfering with the upper arm in motion. Therefore, the disposition of the switching means 40 described herein is suitable for the switching means 40 that includes the first member 41 and the second member 46.

While the foregoing description has been made based on one embodiment illustrating the present invention, the present invention is not limited thereto and can be implemented in various other aspects. The following describes one modification example. In the following description, parts that can be configured similarly to those in the foregoing embodiment are denoted by the same reference characters as those used for corresponding parts in the foregoing embodiment, and duplicate descriptions thereof are omitted.

In the above-described embodiment, the switching means 40 is disposed on the rear side of the output shaft member 76, and the switching means 40 is situated behind the shoulder joint. As described above, the shoulder joint situated between the torso to which the first attachment tool 20 is attached and the upper arm to which the second attachment tool 25 is attached enables motions of the upper arm relative to the torso about the axes da, db, dc, more specifically, the flexion/extension motion, the adduction/abduction motion, and the internal/external rotation motion. In many cases of such motions, a movable range of the upper arm extends in the forward, downward, and laterally inward of the shoulder joint. Therefore, in addition to placing the switching means 40 on the rear side of the output shaft member 76 or the shoulder joint, or instead of placing the switching means 40 on the rear side of the output shaft member 76 or the shoulder joint, the switching means 40 may be placed on the upper or outer side of the output shaft member 76 or the switching means 40 may be placed above or on laterally outer side of the shoulder joint. Even in this modification example, in the same manner as the above-described embodiment, it is possible to effectively prevent the switching means 40 from obstructing not only muscular force assisted motions but also unassisted motions of the arm. In this way, it is possible to reduce restraint on motions of the arm of the wearer who wears the muscular strength assisting apparatus 10.

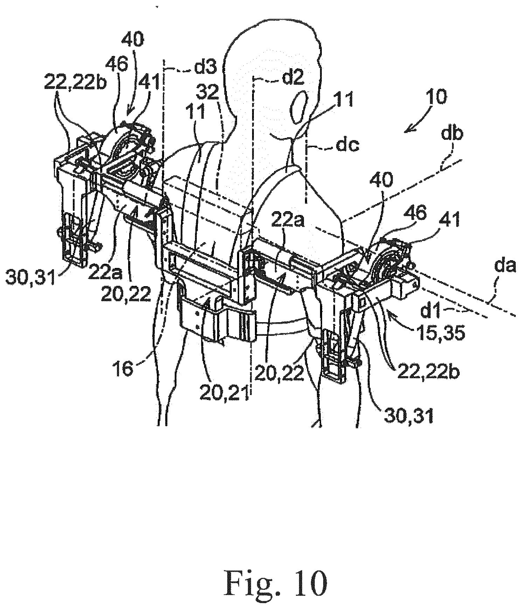

In order to dispose the switching means 40 above or on the laterally outer side of the output shaft member 76 or the shoulder joint, for example, in the above-described embodiment, a force transmission belt member or the like may be provided between the first relay shaft member 71 and the second relay shaft member 73 to secure the drive force transmission, and the first relay shaft member 71 may be then shifted to the upper side or laterally outer side together with the actuator 31 and the switching means 40. Figs. 10 to 12 show another example of the muscular strength assisting apparatus 10. In the examples shown in Figs. 10 to 12, the switching means 40 is disposed on the laterally outer side of the output shaft member 76 and the shoulder joint. In the muscular strength assisting apparatus 10 shown in Figs. 10 to 12, the position control device 15 has the switching means 40 that includes the first member 41 and the second member 46, and the output shaft member 76 connected to the first member 41 of the switching means 40 such that it is unrotatable relative to the first member 41. The first member 41 is rotatable about the first rotation axis d1. Further, the second member 46 is swingable about the swing axis parallel to the first rotation axis d1. Further, the actuator 31 connected to the second member 46 and the adjusting means 37 are both disposed in the plane orthogonal to the first rotation axis d1 together with the switching means 40.

The foregoing embodiment has described the specific configuration of the switching means 40 merely as an example. While the foregoing embodiment has shown the example in which the second member 46, together with the first member 41, constitutes the drum brake mechanism 39, and the swing members 47a, 47b of the second member 46 are brought into contact with the rotary drum 42 of the first member 41 from the radially outer side, there is no limitation thereto. Alternatively, the rotary drum 42 may be formed in a barrel shape, and the second member 46 disposed inside the rotary drum 42 comes in contact with the rotary drum 42 from radially inner side so as to restrict the relative rotation between the first member 41 and the second member 46. Furthermore, the switching means 40 is configured as a ratchet mechanism, and the switching means 40 may be rotated together with the first member 41 by a drive force of the drive means 30 while rotation of the switching means 40 relative to the first member 41 is restricted

Furthermore, in the above-described embodiment, the drive means 30 of the muscular strength assisting apparatus 10 has the fluid source 32 for driving the actuator 31, but the invention is not limited to this example. As the fluid source for driving the actuator 31, the power used in a factory or the like where the muscular strength assisting apparatus 10 is used may be utilized.

The foregoing embodiment has described the specific configuration of the drive means 30 merely as an example. In the above-described embodiment, the drive means 30 applies a force that pulls the second member 46 to the second member 46 (the first swing member 47a), so that the second member 46 is brought in contact with the first member 41. However, it is not limited to this. Alternatively, the second member 46 may be brought into contact with the first member 41 by applying a force that pushes out the second member 46 to the second member 46 (the first swing member 47a). In principle, it is possible to use various actuators as the drive means 30 without limiting to the drive means 30 having the above-described actuator 31.

Furthermore, in the above-described embodiment, the example in which the first member 41 and the second member 46 are brought close to each other and separated from each other is realized by a swinging movement of the second member 46, but this is not only an example. For example, such relative movements between the first member 41 and the second member 46 may be realized by causing the second member 46 to perform a motion other than swinging movement. Alternatively, by moving the first member 41 instead of the second member 46, the first member 41 and the second member 46 may be brought close to each other and separated from each other, or by moving both the second member 46 and the first member 41, they may be brought close to each other and separated from each other.

Furthermore, while the foregoing embodiment has shown an example in which, in the rotation drive mode, the muscular strength assisting apparatus 10 assists only an action of lifting an arm upward and does not assist an action of lowering the arm, there is no limitation thereto, and the muscular strength assisting apparatus 10 may be configured to assist an action of lowering an arm in the rotation drive mode. For example, while the foregoing embodiment has shown an example in which the adjusting means 37 that is formed of the bias member 38 is provided between the second member 46 and the first attachment tool 20, there is no limitation thereto. Alternatively an auxiliary actuator that serves as the adjusting means 37 can be used in place of the bias member 38. According to this modification example, depending on a magnitude of a force acting on the second member 46 from the drive means 30 and a magnitude of a force acting on the second member 46 from the auxiliary actuator 62, the position at which the second member 46 remains still with respect to the first attachment tool 20 together with the rotary member 41 can be controlled with a higher degree of freedom. That is, a position at which the second attachment tool 25 is secured with respect to the first attachment tool 20 can be adjusted with a higher degree of freedom. Furthermore, it becomes also possible to assist in lowering an upper arm.

While several modification examples with respect to the foregoing embodiment have thus been described, needless to say, plural ones of these modification examples can be combined as appropriate, and such combinations are also applicable to the present invention.

## Claims

1. A muscular strength assisting apparatus comprising:
a drive means held by a first attachment tool attached to a torso, and
a transmission means for transmitting a force output by the drive means to a second attachment tool attached to an upper arm,
wherein the transmission means includes an output shaft member connected to the second attachment tool, and a switching means capable of switching between transmission and interruption of the force from the drive means to the output shaft member, and
the switching means is disposed on a rear, upper or laterally outer side of the output shaft member.

2. The muscular strength assisting apparatus of claim 1, wherein the switching means is disposed on the rear side of the output shaft member.

3. The muscular strength assisting apparatus of claim 1 or 2, wherein
the first attachment tool includes a center frame attached to the torso at a position facing a back, and a side frame rotatable relative to the center frame, and
the switching means is supported by the side frame.

4. The muscular strength assisting apparatus of claim 3, wherein a portion of the drive means coupled to the transmission means is supported by the side frame.

5. The muscular strength assisting apparatus of claim 1, wherein the transmission means further includes a shaft member disposed between the output shaft member and the switching means along a force transmission path, the shaft member being rotatable about a rotation axis that is not parallel to a rotation axis of the output shaft member.

6. A muscular strength assisting apparatus comprising:
a drive means held by a first attachment tool attached to a torso, and
a switching means capable of switching between transmission and interruption of a force output by the drive means to the second attachment tool,
wherein the switching means is disposed on a rear, upper or laterally outer side of a shoulder joint.

7. The muscular strength assisting apparatus of claim 6, wherein the switching means is disposed on the rear side of the shoulder join.

8. The muscular strength assisting apparatus of claim 1 or 2, wherein
the switching means includes a first member coupled to the second attachment tool, and a second member coupled to the drive means and capable of moving close to and away from the first member,
the first member is held rotatably relative to the first attachment tool, and
the second member is contactable with the first member from a radial direction about a rotation axis of the first member.
